# EUROPEAN PATENT SPECIFICATION

(11) **EP 1 475 202 B1**
(45) Date of publication and mention of the grant of the patent: **18.10.2006**
(21) Application number: 04010689.0
(22) Date of filing: 05.05.2004
(51) Int. Cl.: B26D 7/12, B26D 7/26, B26D 1/24

(54) **Slitter apparatus with compensating device for slitter blades**
Vorrichtung zum Längsschneiden mit einer Kompensationsvorrichtung für die Schneidmesser
Appareil à refendre avec dispositif de compensation pour les lames de découpe

(30) Priority: 07.05.2003 JP 2003129122
(43) Date of publication of application: 10.11.2004
(73) Proprietor: Kabushiki Kaisha Isowa, Nagoya-shi, Aichi-ken (JP)
(72) Inventor: Adachi, Nokihisa, Kasugai-shi Aichi-ken (JP); Naitou, Minoru, Kasugai-shi Aichi-ken (JP); Ihara, Syunichi, Ehime-ken (JP)
(74) Representative: Müller-Boré & Partner Patentanwälte

(56) References cited:
- WO-A-91/13733
- US-A- 4 548 105
- US-A- 4 592 259
- US-A- 5 979 282

## Description

### TECHNICAL FIELD OF THE INVENTION

The present invention generally relates to a slitter apparatus according to the preamble of claim 1 for cutting a corrugated cardboard sheet being continuously fed along a feeding line with disk-shaped slitter blades, and more particularly, to a slitter apparatus including a compensating device for compensating the depth of engagement between the disk-shaped slitter blades and slitter pads based on the radii or diameters of the disk-shaped slitter blades measured by a measuring means. WO 81/13783A discloses an example of an apparatus according to the preamble of claim 1.

### BACKGROUND ART OF THE INVENTION

In the process for manufacturing a corrugated box, a continuous corrugated cardboard sheet, for example, a single faced corrugated cardboard sheet, a double faced corrugated cardboard sheet, or a double wall corrugated cardboard sheet is fed along a feeding line, during which time it is cut by a slitter-scorer apparatus along the feeding line and formed with creased lines thereon if desired, thereafter assembled into the corrugated box.

In such a processing machine, the slitter-scorer includes a plurality of slitter heads for cutting the corrugated cardboard sheet along the feeding line of the corrugated cardboard sheet at desired locations in the width direction of the corrugated cardboard sheet. The machine also includes a plurality of scorer heads to form creased lines on the corrugated cardboard sheet at desired locations in the width direction of the corrugated cardboard sheet. The slitter heads and the scorer heads are moveably supported in the width direction of the corrugated cardboard sheet.

Each of the slitters comprises a disk-shaped slitter blade and a slitter pad disposed in an opposed relationship to one another, rotational driving means for rotating the disk-shaped slitter blade and the slitter pad, respectively, a positioning device for moving the disk-shaped slitter blade in the width direction of the corrugated cardboard sheet, and a pneumatically controlled loading/unloading device for moving the disk-shaped slitter blade in the vertical loaded and/or unloaded positions relative to the corrugated cardboard sheet in such a manner that the loaded position is a position at which the disk-shaped slitter blade cuts the corrugated cardboard sheet and the unloaded position is a position at which the disk-shaped slitter blade is spaced apart from the surface of the corrugated cardboard sheet so as to not cut it. The function of the scorers is basically the same as that of the slitters, except that the latter is used for cutting the corrugated cardboard sheet at desired locations in the width of the corrugated cardboard sheet along the feeding line thereof, while the former forms the creased lines on the corrugated cardboard sheet at desired locations in the width of the corrugated cardboard sheet along the feeding line thereof.

According to the slitter-scorer apparatus in the prior art, the corrugated cardboard sheet may be cut at desired locations in the width direction of the corrugated cardboard sheet along the feeding line thereof by moving the slitter blades via pneumatically driven cylinders from a semifixed unloaded position of the slitter blades to a semifixed loaded position thereof, wherein both positions are adjusted by some adjusting means such as bolts and nuts. However, the circumferential cutting edges of the disk-shaped slitter blades being rotated during the cutting operation of the corrugated cardboard sheet will gradually become dull, especially after long term use of the disk-shaped slitter blades, which typically causes a poorer cutting quality, i.e., not very sharp cutting edges are formed on the corrugated cardboard sheet being cut. Therefore, the circumferential cutting edges of the disk-shaped slitter blades must be ground periodically by grinding means therefor in order to renew or sharpen the circumferential cutting edges of the disk-shaped slitter blades so as to improve the cutting quality thereof. After a large number of such grindings of the disk-shaped slitter blades, the radii and/or diameters of the disk-shaped slitter blades become smaller due to the wear of the circumferential cutting edges thereof, as a result of which the depth of engagement between the disk-shaped slitter blades and slitter pads becomes shallow. This causes the cutting ability of the slitters to be lessened and thus the cutting edges formed on the corrugated cardboard sheet by the disk-shaped slitter blades will become coarse or rough, and even worse, the operation for cutting the corrugated cardboard sheet might be impossible to do.

### SUMMARY OF THE INVENTION

The object of the present invention is to provide a slitter apparatus with a compensating device for the slitter blades thereof in order to provide a stable or proper operation for cutting the corrugated cardboard sheet.

According to the present invention, a slitter apparatus is provided having the features of claim 1.

In one preferred embodiment of the present invention, said measuring means further comprises: positioning sensors for detecting the vertical position of each of said disk-shaped slitter blades; an optical sensor having an optical axis generally disposed in a parallel relationship with respect to the surface of said corrugated cardboard sheet, said optical axis being disposed adjacent to the circumferential cutting edges of said disk-shaped slitter blades; and a calculating means for calculating the radius of at least one of said disk-shaped slitter blades based on the vertical position of said disk-shaped slitter blade detected by said positioning sensor when the circumferential cutting edge of said disk-shaped slitter blade interrupts said optical axis of said optical sensor. In another optional embodiment of the invention, said disk-shaped slitter blades are vertically driven independently by said respective elevating means so as to enable precise positioning of the disk-shaped slitter blades at desired locations where the disk-shaped slitter blades operate. In a further optional method embodiment of the invention, said grinding means are controlled in such a way that the respective durations of the operation for grinding said grinding means for each of said disk-shaped slitter blades are controlled based on the respective radii of said disk-shaped slitter blades measured by said measuring means.

In another optional embodiment of the invention, the radii of said disk-shaped slitter blades are measured based on the positions of said grinding means when said grinding means finish the operation for grinding said disk-shaped slitter blades. Another optional embodiment of the invention, further comprises a predicting means for predicting the respective expected life periods for said disk-shaped slitter blades based on the radii of said disk-shaped slitter blades measured by said measuring means and the current total cutting or working length of said disk-shaped slitter blades since they were new, wherein said predicting means predicts said respective expected life periods for said disk-shaped slitter blades by considering sampling data extracted from the performance curve showing historical relationships between the radii of said disk-shaped slitter blades and the cutting or working length thereof. Another optional embodiment of the invention further comprises a display means for displaying the radii of said disk-shaped slitter blades measured by said measuring means.

For a better understanding of the present invention, and to show more clearly how the same may be carried into effect, reference will now be made, by way of example, to the accompanying drawings, in which:
Figure 1 illustrates a schematic side view of a corrugated cardboard processing machine including a slitter apparatus with a compensating device for slitter blades in accordance with the present invention;
Figure 2 illustrates a front view of a slitter apparatus in accordance with one embodiment of the present invention;
Figure 3 illustrates an enlarged schematic side view of a portion of the slitter head of a slitter apparatus in accordance with the embodiment of the present invention;
Figure 4 illustrates a block diagram of controlling elements for controlling the slitter apparatus in accordance with the embodiment of the present invention;
Figure 5 illustrates a flow-chart showing the operations of the measuring means of the slitter apparatus in accordance with the embodiment of the present invention;
Figure 6 illustrates a front view of a slitter apparatus in accordance with another embodiment of the present invention;
Figure 7 illustrates a schematic view of a grinding means of a slitter apparatus in accordance with another embodiment of the present invention;
Figure 8 illustrates a schematic drawing showing the relationship between the disk-shaped slitter blade and the slitter pad when they are engaged with each other in accordance with the embodiment of the present invention;
Figure 9 illustrates an enlarged cross-sectional view showing the relationship between the disk-shaped slitter blade and the slitter pad when they are engaged with each other in accordance with the embodiment of the present invention;
Figure 10 illustrates an enlarged cross-sectional view showing the relationship between the disk-shaped slitter blade and the slitter pad when they are engaged with each other in accordance with another embodiment of the present invention; and
Figure 11 illustrate a graph showing the historical relationship between a cutting or working length of the disk-shaped slitter blade and its diameter.

### PREFERRED EMBODIMENTS OF THE INVENTION

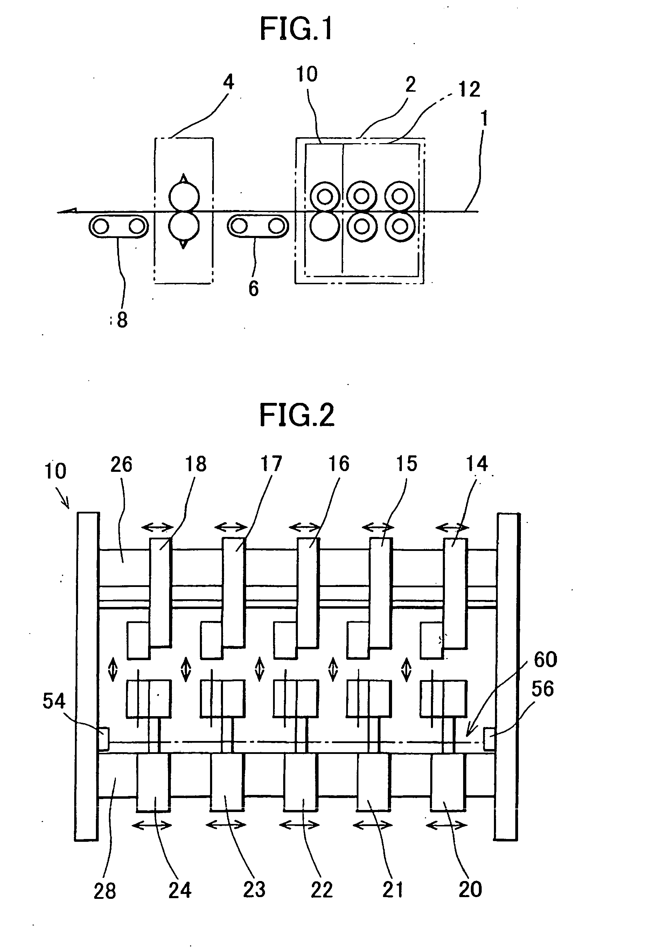

As can be seen in Figure 1, this corrugated cardboard processing machine includes a feeding line along which a continuous corrugated cardboard sheet 1 is fed. A slitter-scorer apparatus 2 and a cutting device 4 are disposed along the feeding line of the corrugated cardboard sheet 1. Also, conveyors 6 and 8 are disposed along the feeding line in such a manner that the conveyor 6 is located upstream of the cutting device 4 while the conveyor 8 is located downstream of the cutting device 4.

The slitter-scorer apparatus 2 comprises a slitter apparatus 10 and a scorer apparatus 12, the slitter apparatus 10 cutting the corrugated cardboard sheet 1 along the feeding line thereof, as described in further detail below, while the scorer apparatus 12 forms creased lines on the corrugated cardboard sheet 1. The cutting device 4, which is well known in the art, cuts the corrugated cardboard sheet 1 in its width direction.

As can be seen in Figure 2, the slitter apparatus 10 comprises a plurality of sets of slitter heads, i.e., in the embodiment shown, there are five sets of slitter heads comprised of upper slitter heads 14-18 and lower slitter heads 20-24, respectively. Each of the upper slitter heads 14-18 is supported on an upper beam member 26 in such a manner that they can move in the width direction of the corrugated cardboard sheet 1 independent of each other. Similarly, each of the lower slitter heads 20-24 is supported on a lower beam member 28 in such a manner that they can move in the width direction of the corrugated cardboard sheet 1 independent of each other.

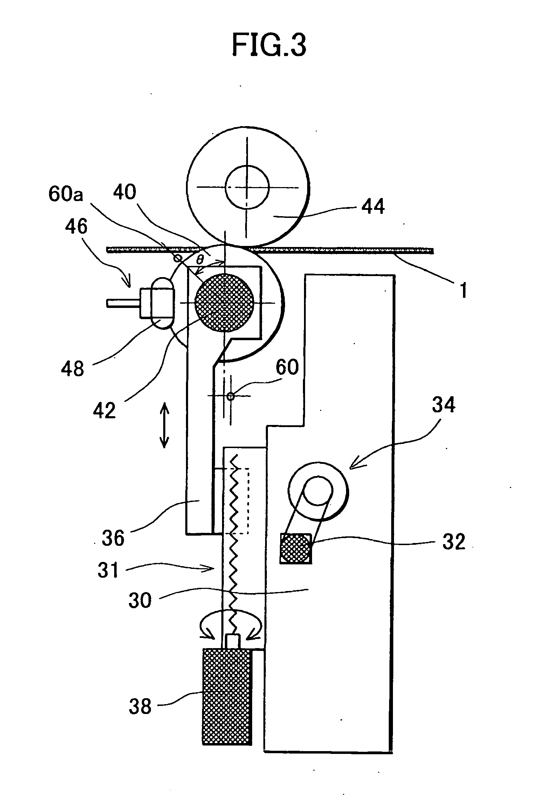

Since the constructions of all of the lower slitter heads 20-24 are the same, the construction of only one lower slitter head 20 will now be described in detail below with reference to the Figure 3. The lower slitter head 20 includes a moving base 30 supported on the lower beam member 28. When a servo motor 32 is rotationally driven, the moving base 30 moves along the lower beam member 28 via a driving mechanism 34 comprised of, for example, a threaded shaft and a nut.

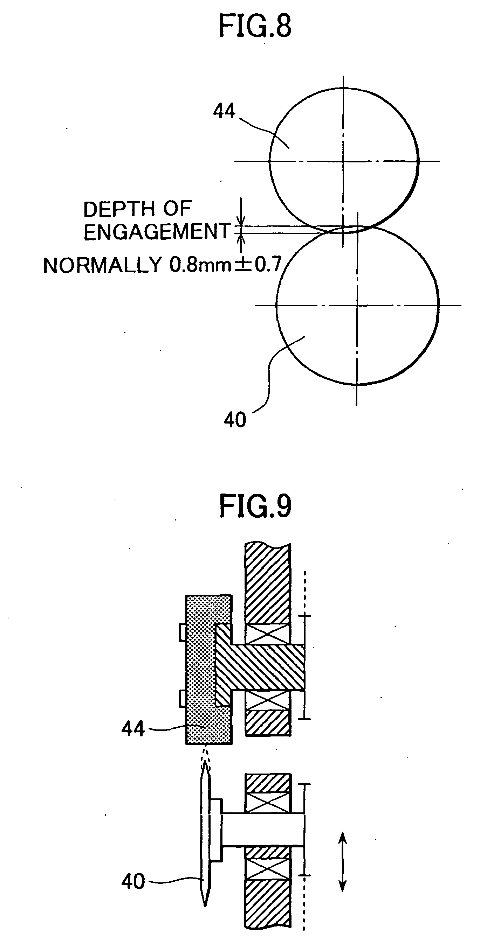

The moving base 30 includes an elevating device 31 which includes an elevating member 36 supported moveably with respect to the corrugated cardboard sheet 1 in the vertical direction. When a servo motor 38 mounted on the moving base 30 is rotationally driven, the elevating member 36 is precisely positioned at a desired height in the vertical direction via the elevating device 31 comprised of a threaded shaft and a nut. The thin disk-shaped slitter blade 40 is attached at the top portion of the elevating member 36. This disk-shaped slitter blade 40 is rotationally driven by a direct driving motor 42 or, in an alternative embodiment, may be rotationally driven via a driving shaft (not shown) which is driven by a motor. The upper slitter head 14 also includes a slitter pad 44 disposed above the disk-shaped slitter blade 40 in such a manner that the corrugated cardboard sheet 1 is disposed therebetween. More particularly, the disk-shaped slitter blade 40 and the slitter pad 44 engage with each other, i.e., the circumferential cutting edge of the disk-shaped slitter blade 40 enters into the surface of the slitter pad 44 by a depth of engagement which is in the range of 0.1 mm to 1.5 mm, more preferablly 0.8 mm, the depth chosen depending on various factors, such as the thickness of the disk-shaped slitter blade 40 and/or the construction or material of the slitter pad 44, etc. When this depth of engagement is properly and precisely selected, for example at 0.8 mm, an optimized or proper cutting operation for or best condition for cutting the corrugated cardboard sheet 1 by the disk-shaped slitter blade 40 and the slitter pad 44 is provided. The constructions of the disk-shaped slitter blade 40 and the slitter pad 44 will be explained in more detail below, with reference to the Figure 8 to 10.

The disk-shaped slitter blade 40 comprises a grinding device 46 including a grindstone 48 for grinding the circumferential cutting edge of the disk-shaped slitter blade 40 by pressing the grindstone 48 against the disk-shaped slitter blade 40 during the rotational movement of the disk-shaped slitter blade 40 for cutting the corrugated cardboard sheet 1. Obviously, the grinding device 46 can be used for grinding the circumferential cutting edge of the disk-shaped slitter blade 40 even when the disk-shaped slitter blade 40 is not cutting the corrugated cardboard sheet 1, as long as the disk-shaped slitter blade 40 is being rotated.

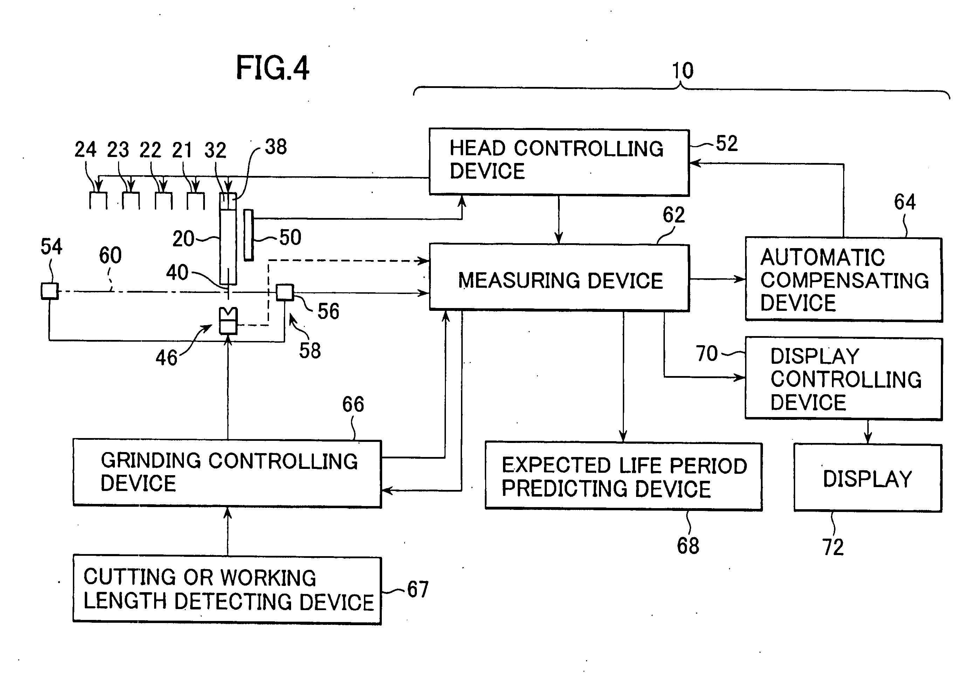

Reference will now be made to Figure 4, which illustrates a block diagram of controlling elements for controlling the slitter apparatus described above. As can be seen in the drawing, a positioning sensor 50 is provided for detecting the vertical position of the elevating member 36 of the elevating device 31 described above in relation to the Figure 3. The positioning sensor 50 is connected to a heads controlling device 52. The servo motors 32 and 38 are also connected to the heads controlling device 52. In an alternative embodiment of the present invention, a position feedback means included in the servo motor 38 may be used instead of the positioning sensor 50, whereby the independent positioning sensor 50 can be omitted. The heads controlling device 52 detects the vertical position of the elevating member 36 via the positioning sensor 50 and controls the servo motor 38 for positioning the elevating member 36 at a desired vertical height in accordance with the order specification for the cutting process to be done. The heads controlling device 52 also controls the servo motor 32 for positioning the lower slitter head 20 in the width direction of the corrugated cardboard sheet 1 in accordance with the order specification for the cutting process. The other lower slitter heads 21-24 are controlled in the same manner as that of the lower slitter head 20 in order to provide operations for cutting the corrugated cardboard sheet 1 in accordance with the order specification for the cutting process.

Furthermore, the slitter apparatus 10 includes an optical sensor 58 comprised of a laser beam transmitter 54 and a laser beam receiver 56, and the optical axis 60 formed therebetween is located, as shown in Figure 3, below the rotational center of the disk-shaped slitter blade 40 in a parallel relationship with respect to the rotational axis of the disk-shaped slitter blade 40 in such a manner that the optical beam along the optical axis 60 is interrupted by the circumferential cutting edge of the disk-shaped slitter blade 40 when the disk-shaped slitter blade 40 is moved lower. Each of the radii of the disk-shaped slitter blades 40 of the lower slitter heads 20-24, respectively, is determined by a distance between the optical axis 60 and the rotational center of the disk-shaped slitter blade 40 at the moment when the optical axis 60 is interrupted by the disk-shaped slitter blade 40, which occurs when the disk-shaped slitter blade 40 is being moved downwardly toward its rest position. In an alternative embodiment of the present invention, an optical axis 60a can be located, as shown in Figure 3, in a space formed between the corrugated cardboard sheet 1 and the disk-shaped slitter blade 40, to form an angle theta relative to the vertical axis, which enables the radius of the disk-shaped slitter blade 40 to be measured during the operation for cutting the corrugated cardboard sheet 1 by the disk-shaped slitter blade 40. In this alternative embodiment, the vertical distance between the optical axis 60a and the rotational center of the disk-shaped slitter blade 40 when the optical axis 60a is interrupted by the disk-shaped slitter blade 40 is equal to the value that is results from multiplying a cosine theta by the actual radius of the disk-shaped slitter blade 40.

The optical sensor 58 generates an on/off signal indicating whether the optical axis 60 is interrupted or not, which signal is provided to a measuring device 62. The measuring device 62 also receives a signal indicating the current vertical position of the disk-shaped slitter blade 40 from the heads controlling device 52. The output signals from the measuring device 62 indicating the measured radius of each of the disk-shaped slitter blades 40 are provided to an automatic compensating device 64, a grinding controlling device 66, an expected life period predicting device 68 and a display controlling device 70, respectively.

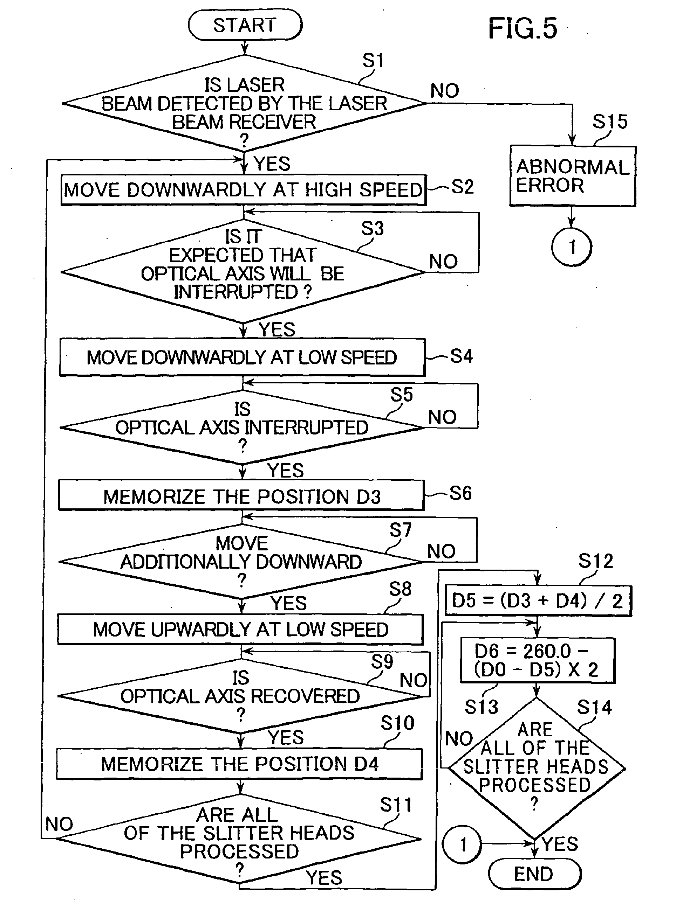

Reference will now be made to Figure 5, which illustrates a flow-chart showing the operations for measuring the radius of the disk-shaped slitter blade in accordance with the present invention. The grinding controlling device 66 of the slitter apparatus 10 receives a signal from a cutting or working length detecting device 67 disposed in the feeding line of the corrugated cardboard sheet 1, which signal indicates the length of the corrugated cardboard sheet 1 being processed. The grinding controlling device 66 cumulatively calculates the current total cutting or working lengths of the corrugated cardboard sheet 1 cut by using the respective disk-shaped slitter blades 40-44 of the lower slitter heads 20-24, respectively. When one of the current total cutting or working lengths corresponding to one of the disk-shaped slitter blades 40 reaches a predetermined value, the grinding controlling device 66 executes a grinding operation for the respective disk-shaped slitter blade 40 by driving the grinding device 46, so that the grinding operation for each of the disk-shaped slitter blades 40 is provided periodically. After the grinding operation has finished, the grinding controlling device 66 stores in its memory the information that the radius of the respective disk-shaped slitter blade 40 is to be measured in order to decide whether this disk-shaped slitter blade 40 has a radius large enough to provide a proper cutting operation, which measurement is obtained when this disk-shaped slitter blade 40 is moved downwardly toward its rest position.

More particularly, this measuring process starts from the step S1, as shown in Figure 5, in which the laser beam receiver 56 tries to detect the laser beam emitted from the laser beam transmitter 54 and pass along the optical axis 60. If the laser beam is detected by the laser beam receiver 56, in the next step S2, the servo motor 38 is driven in such a manner that the disk-shaped slitter blade 40 is moved downwardly with the elevating member 36 at a relatively high speed. On the other hand, i.e., if the laser beam is not detected by the laser beam receiver 56, this means that the optical sensor 58 including the laser beam transmitter 54 and the laser beam receiver 56 is having some trouble, and therefore the process goes to the step S15, in which an abnormal error is handled, for example, by showing error message to the operator.

In the step S3, the elevating member 36 is continuously moved downwardly, until it reaches a predetermined position located, for example, 2 mm above a position where the optical axis 60 is expected to be interrupted by the circumferential cutting edge of the disk-shaped slitter blade 40. Such a predetermined position is chosen based on the initial radius of the disk-shaped slitter blade 40 and/or the actual radius of the same measured the last time. When the elevating member 36 reaches the predetermined position explained in relation to the step S3, the moving speed of the elevating member 36 is switched from high to slow in the step S4.

In the step S5, whether the optical axis 60 is interrupted by the disk-shaped slitter blade 40 or not is indicated by the signal from the optical sensor 58 and when the interruption of the optical axis 60 by the disk-shaped slitter blade 40 is detected, in the next step S6, the current vertical position D3 of the elevating member 36 detected by the positioning sensor 50 is stored in a memory included in the measuring device 62.

Even after the interruption of the optical axis 60 by the disk-shaped slitter blade 40 is detected, the disk-shaped slitter blade 40 is moved additionally downward by a predetermined distance, for example, 2 mm below the position where the interruption was detected (S7). When the positioning sensor 50 detects that the disk-shaped slitter blade 40 was moved downwardly by a predetermined distance explained above, in the next step S8, the movement of the disk-shaped slitter blade 40 with the elevating member 36 is switched from a downward direction to an upward direction by controlling the servo motor 38 so that the disk-shaped slitter member 40 moves upwardly at a relatively low speed.

In the step S9, whether the optical axis 60 once interrupted by the disk-shaped slitter blade 40 becomes uninterrupted again by the upward movement of the disk-shaped slitter blade 40 or not is indicated by the signal from the optical sensor 58 and when the optical axis 60 becomes uninterrupted, in the next step S 10, the current vertical position D4 of the elevating member 36 detected by the positioning sensor 50 is stored in the memory included in the measuring device 62. In this embodiment, the position detection for the elevating member 36 is done two times, i.e., when it moves downwardly and when it moves upwardly so as to improve the accuracy of the measurements. In an alternative embodiment of the present invention, the position detection for the elevating member 36 may be done only once, i.e., when the optical axis 60 is interrupted or when the optical axis 60 becomes uninterrupted.

These steps from S2 to S10 are repeatedly executed for each of the slitter heads 20-24, and when such processes have been finished for all of the slitter heads 20-24 (S11), the step S12 is executed, in which average values D5 = (D3 + D4) / 2 for each of the slitter heads 20-24 are calculated.

In the next step S 13, the current diameter D6 of the disk-shaped slitter blade 40 is calculated by an equation D6 = 260.0 - (D0 - D5) X 2 for each of the disk-shaped slitter blades 40, where 260.0 mm is an initial diameter of the disk-shaped slitter blade 40, D0 is an initial position data obtained in the same manner as data D3 and/or D4 are/is obtained but when the disk-shaped slitter blade is new. This step S 13 is repeatedly executed for each of the slitter heads 20-24 (S14). It is obvious that the disk-shaped slitter blade 40 having a diameter other than 260 mm can be used in the same manner as such a blade having a diameter of 260 mm, so as to obtain current diameter of the disk-shaped slitter blade 40 based on the position detected by the positioning sensor 50.

The measuring operation described above is executed at predetermined timings, such as after the operation for grinding the disk-shaped slitter blade 40 is finished, and/or when the disk-shaped slitter blade 40 has been used for cutting for a predetermined cutting or working length after it was last ground. After each such measuring operation, the measurements D6 of the disk-shaped slitter blades 40 and the current total cutting or working lengths of the same are stored in the memory and simultaneously sent to the automatic compensating device 64. The automatic compensating device 64 obtains historical wearing characteristics of the disk-shaped slitter blade 40 known from the initial diameter D6-0, the diameter measured last D6-(n-1), and the current diameter D6-n. This historical wearing characteristic is obtained for each of the disk-shaped slitter blades 40 of the respective lower slitter heads 20-24, and respective depths of wear α of the disk-shaped slitter blades 40 are sent to the heads controlling device 52.

The heads controlling device 52 controls the servo motor 38 in such a manner that the elevating member 36 is positioned at a position Pn, in which Pn = P0 - α , where P0 is the initial position of the elevating member 36 when the disk-shaped slitter blade 40 is new, so that the depth of engagement between the circumferential cutting edge of the disk-shaped slitter blade 40 and the slitter pad 44 during the operation for cutting the corrugated cardboard sheet 1 is adjusted to a desired depth such as 0.8 mm. Since each of the disk-shaped slitter blades 40 of the respective lower slitter heads 20-24 has an inherent depth of wear α , the respective positions Pn of the disk-shaped slitter blades 40 are different from each other.

The grinding controlling device 66 cumulatively calculates the current total cutting or working lengths of the corrugated cardboard sheet 1 cut by using the respective disk-shaped slitter blades 40 of the lower slitter heads 20-24, respectively, and when one of the current total cutting or working lengths corresponding to one of the disk-shaped slitter blades 40 reaches a predetermined value, which value suggests the circumferential cutting edge of the disk-shaped slitter blade 40 has become dull, the grinding controlling device 66 executes the grinding operation for the respective disk-shaped slitter blades 40 by driving the grinding device 46. The duration for executing this grinding operation is set longer than is enough to sharpen the circumferential cutting edge of the disk-shaped slitter blade 40. More particularly, the duration for the grinding operation is initially set at 5 seconds, which duration will be varied based on the radius of the disk-shaped slitter blade 40 measured by the measuring device 62, for example, in accordance with a numerical database (table) included in the grinding controlling device 66.

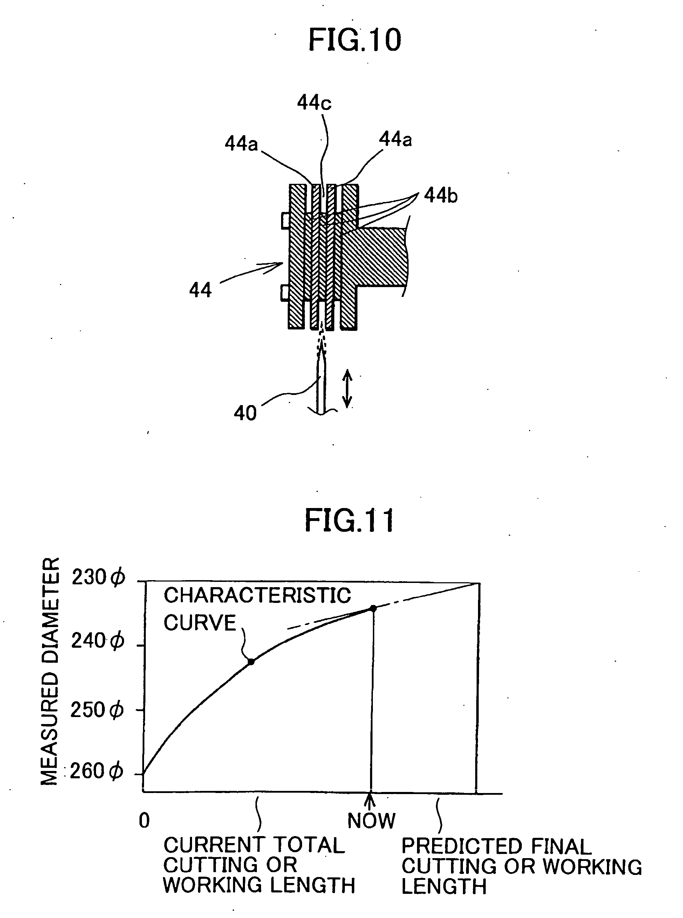

The expected life period predicting device 68 accepts the diameters and the current total cutting or working lengths of the respective disk-shaped slitter blades 40 from the measuring device 62, which relationship between said diameters and lengths is typically shown in Figure 11, and predicts the respective expected life periods for the disk-shaped slitter blades 40. As shown in Figure 11, a prototype equation for drawing a curve to be adjusted so as to match with the actual characteristic curve by setting variables of the equation is provided to the expected life period predicting device 68, so that the equation is completed by substitution of the variables based on the actual diameters of the disk-shaped slitter blades 40 measured by the measuring device 62. By using the completed equation, the current total cutting or working length corresponding to the diameter of 230 mm can be obtained. In an alternative, more simply, embodiment of the present invention, a first approximation can be used by using the current diameter and the diameter measured previously, for example, 100,000 m before, in order to predict the final cutting or working length corresponding to the diameter of 230 mm. Thereby, the final cutting or working length of the disk-shaped slitter blade 40 when the disk-shaped slitter blade 40 can not be used anymore due to it being worn to its minimum diameter, for example, 230 mm in this embodiment, can be predicted.

The measuring device 62 also provides information as to the diameter being measured and current total cutting or working length to the display controlling device 70, which shows these data on a display 72. In this embodiment, a measuring means is comprised of the positioning sensor 50, the optical sensor 58 and the measuring device 62, or in addition to these, the grinding device 46.

Referring now to the Figures 8 to 10, the engaging relationship between the disk-shaped slitter blade 40 and the slitter pad 44 will now be explained below.

As can be seen in Figure 8, the circumferential cutting edge of the disk-shaped slitter blade 40 enters into the surface of the slitter pad 44 by a depth of engagement. The depth of engagement can be in the range of 0.1 mm to 1.5 mm, normally it is 0.8 mm. As can be seen in Figure 9, the slitter pad 44 is formed of an elastic material such as urethane or nylon so as to allow the depth of engagement. In an alternative embodiment of the present invention, as shown in Figure 10, the slitter pad 44 is comprised of a plurality of alternately disposed carbon fiber plates 44a and spacers 44b in such a manner that a slit 44c is formed between each of the carbon fiber plates 44a and the spacers 44b so that the circumferential cutting edge of the disk-shaped slitter blade 40 can be accepted therein, thereby obtaining the depth of engagement.

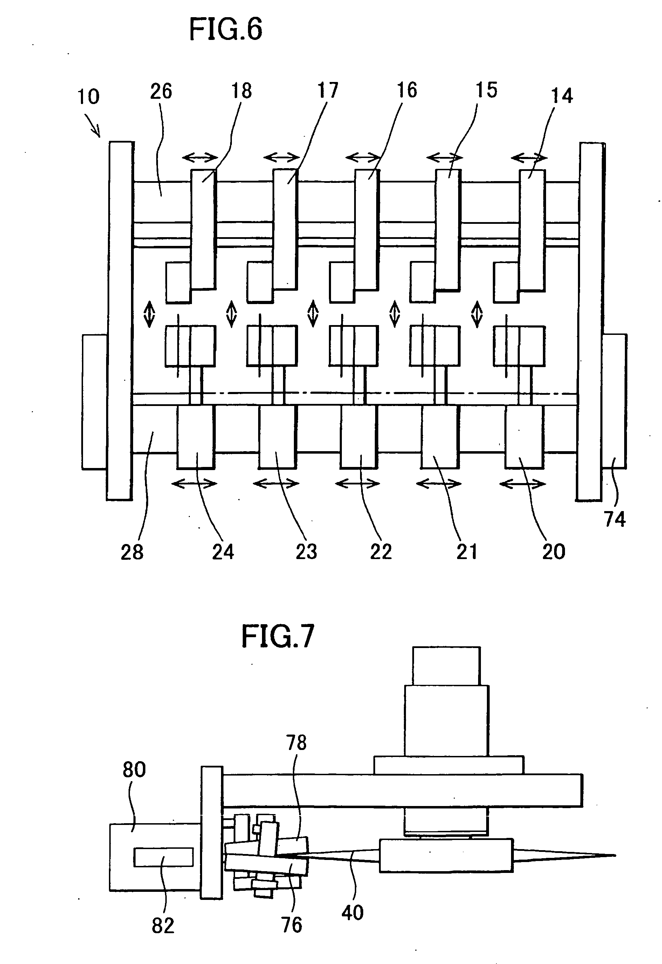

Although the embodiment described above includes the elevating device 31 for each of the lower slitter heads 20-24, respectively, an alternative embodiment of the present invention shown in Figure 6 can be comprised of an elevating device 74 for moving the lower beam member 28 in upper and/or lower directions, whereby all of the lower slitter heads 20-24 are moved simultaneously. In such a embodiment, the compensating is based on an average diameter of all of the disk-shaped slitter blades 40 of the lower slitter heads 20-24, or one of the diameters of the disk-shaped slitter blades 40 of the lower slitter heads 20-24.

Reference will now be made to Figure 7, which illustrates another measuring means in accordance with an alternative embodiment of the present invention. This measuring means, also consisting of a grinding means, is comprised of a pair of disk-shaped grindstones 76 and 78 which is moveable toward and/or away from the rotational center of the disk-shaped slitter blade 40 by a driving cylinder 80. The driving cylinder 80 includes a positioning sensor 82 for detecting the movements of the grindstone 76 and 78 by the driving cylinder 80 so as to obtain the positions of the grindstone 76 and 78 when they are engaging with the disk-shaped slitter blade 40. The diameter of the disk-shaped slitter blade 40 is measured based on the positions of the grindstone 76 and 78 compared to those when the disk-shaped slitter blade 40 was new.

The embodiments shown in the drawings and described above are only one way to realize the subject matter of this invention. Those skilled in the art will be able to realize the invention in different embodiments without departing from the scope of the claims.

Thus, the present invention provides a slitter apparatus with a compensating device for the slitter blades thereof in which the vertical positions of the disk-shaped slitter blades are compensated based on the radii and/or diameters of the disk-shaped slitter blades measured, thereby providing a stable or proper operation for cutting the corrugated cardboard sheet.

## Claims

1. A slitter apparatus (2) for cutting a corrugated cardboard sheet (1) being continuously fed along a feeding line by moving at least one of a plurality of disk-shaped slitter blades (40) of said slitter apparatus (2) driven by respective elevating means (31) toward said corrugated cardboard sheet comprising:
grinding means (46) for grinding each of said disk-shaped slitter blades (40), **characterised by** further comprising :
a measuring means (58) for measuring at least one of the radii and/or diameters of said disk-shaped slitter blades (40); and
an automatical compensating means (32,64) for compensating the depth of engagement between said disk-shaped slitter blades (40) and slitter pads (44) based on said radii of said disk-shaped slitter blades measured by said measuring means (58) in order to provide an optimized or proper operation for cutting said corrugated cardboard sheet (1) between said disk-shaped slitter blades (40) and the slitter pads (44).

2. The slitter apparatus as recited in claim 1, said measuring means further comprising:
positioning sensors (50) for detecting the vertical position of each of said disk-shaped slitter blades (40);
an optical sensor (58) having an optical axis (60) generally disposed in a parallel relationship with respect to the surface of said corrugated cardboard sheet (1), said optical axis (60) being disposed adjacent to the circumferential cutting edges of said disk-shaped slitter blades (40);
a calculating means (62) for calculating the radius of at least one of said disk-shaped slitter blades based on the vertical position of said disk-shaped slitter blade detected by said positioning sensor (50) when the circumferential cutting edges of said disk-shaped slitter blade (40) interrupts said optical axis (60) of said optical sensor.

3. The slitter apparatus recited in claims 1 or 2, wherein said disk-shaped slitter blades (40) are vertically driven independently by said respective elevating means (31).

4. The slitter apparatus recited in claims 1, 2 or 3, wherein said grinding means (46) are controlled in such a way that the respective durations of the operation for grinding each of said disk-shaped slitter blades are controlled based on the respective radii of said disk-shaped slitter blades (40) measured by said measuring means (58, 62).

5. The slitter apparatus recited in claim 1, wherein the radii of said disk-shaped slitter blades (40) are measured based on the positions of said grinding means (46) when said grinding means (46) finish the operation grinding for said disk-shaped slitter blades (40).

6. The slitter apparatus (2) recited in any one of claims 1 to 5 further comprising a predicting means (68) for predicting the respective expected life periods for said disk-shaped slitter blades (40) based on the radii of said disk-shaped slitter blades (40) measured by said measuring means (58,62) and the current total cutting or working length of said disk-shaped slitter blades (40) since they were new, wherein said predicting means (68) predicts said respective expected life periods for said disk-shaped slitter blades (40) by considering sampling data extracted from the performance curve showing historical relationships between the radii of said disk-shaped slitter blades (40) and the cutting or working length thereof.

7. The slitter apparatus (2) recited in any one of claims 1 to 6 further comprising a display means (72) for displaying the radii of said disk-shaped slitter blades (40) measured by said measuring means (58, 62, 64).

## Patentansprüche

1. Vorrichtung zum Längsschneiden bzw. Schlitzvorrichtung (2) zum Schneiden eines Wellpappeblatts (1), das kontinuierlich entlang einer Zufuhrlinie zugeführt ist, indem wenigstens eine aus einer Mehrzahl von scheibenförmigen Schneid- bzw. Schlitzklingen (40) der Vorrichtung zum Längsschneiden (2), die durch entsprechende Hebemittel (31) angetrieben bzw. getrieben sind, zu dem Wellpappeblatt bewegt ist bzw. wird, umfassend:
Schleifmittel (46), um jede der scheibenförmigen Schneidklingen (40) zu schleifen, **gekennzeichnet dadurch, daß** sie weiterhin umfaßt:
Meßmittel (58) zum Messen von wenigstens einem der Radien und/oder Durchmesser der scheibenförmigen Schneidklingen (40) und
automatisches Kompensationsmittel (32, 64), um die Tiefe eines Eingriffs zwischen den scheibenförmigen Schneidklingen (40) und Schlitz- bzw. Schneidkissen (44) basierend auf den Radien der scheibenförmigen Schneidklingen zu kompensieren, die durch die Meßmittel (58) gemessen sind, um eine optimierte oder geeignete Betätigung zum Schneiden des Wellpappeblatts (1) zwischen den scheibenförmigen Schneidklingen (40) und den Schneidkissen (44) zur Verfügung zu stellen.

2. Vorrichtung zum Längsschneiden nach Anspruch 1, wobei die Meßmittel weiterhin umfassen:
Positioniersensoren (50) zum Detektieren der vertikalen Position von jeder der scheibenförmigen Schneidklingen (40);
einen optischen Sensor (58), der eine optische Achse (60) aufweist, die im Wesentlichen bzw. allgemein in einer parallelen Beziehung in bezug auf die Oberfläche des Wellpappeblatts (1) angeordnet ist, wobei die optische Achse (60) benachbart den Umfangsschneidkanten der scheibenförmigen Schneidklingen (40) angeordnet ist;
Berechnungsmittel (62) zum Berechnen des Radius von wenigstens einer der scheibenförmigen Schneidklingen basierend auf der vertikalen Position der scheibenförmigen Schneidklinge, die durch den Positioniersensor (50) detektiert ist, wenn die Umfangsschneidkanten der scheibenförmigen Schneidklinge (40) die optische Achse (60) des optischen Sensors unterbrechen.

3. Vorrichtung zum Längsschneiden nach einem der Ansprüche 1 oder 2, wobei die scheibenförmigen Schneidklingen (40) vertikal unabhängig durch die entsprechenden Hebe- bzw. Anhebemittel (31) angetrieben sind.

4. Vorrichtung zum Längsschneiden nach einem der Ansprüche 1, 2 oder 3, wobei die Schleifmittel (46) in einer derartigen Weise gesteuert bzw. geregelt sind, daß die entsprechenden Dauern des Betriebs bzw. Vorgangs für ein Schleifen von jeder der scheibenförmigen Schneidklingen basierend auf den entsprechenden Radien der scheibenförmigen Schneidklingen (40) gesteuert bzw. geregelt sind, die durch die Meßmittel (58, 62) gemessen sind.

5. Vorrichtung zum Längsschneiden nach Anspruch 1, wobei die Radien der scheibenförmigen Schneidklingen (40) basierend auf den Positionen der Schleifmittel (46) gemessen sind, wenn die Schleifmittel (46) die Schleiftätigkeit für die scheibenförmigen Schneidklingen (40) beenden.

6. Vorrichtung zum Längsschneiden (2) nach einem der Ansprüche 1 bis 5, weiterhin umfassend Vorhersagemittel (68), um die entsprechenden erwarteten Lebensdauern für die scheibenförmigen Schneidklingen (40) basierend auf den Radien der scheibenförmigen Schneidklingen (40), die durch die Meßmittel (58, 62) gemessen sind, und der gegenwärtigen gesamten Schneid- oder Arbeitsdauer der scheibenförmigen Schneidklingen (40) vorherzusagen, seit diese neu waren, wobei die Vorhersagemittel (68) die entsprechenden erwarteten Lebensdauern für die scheibenförmigen Schneidklingen (40) durch ein Berücksichtigen von Probendaten vorhersagen, die von der Leistungskurve extrahiert sind, die historische Beziehungen zwischen den Radien der scheibenförmigen Schneidklingen (40) und der Schneid- oder Arbeitsdauer derselben zeigt.

7. Vorrichtung zum Längsschneiden (2) nach einem der Ansprüche 1 bis 6, weiterhin umfassend Anzeigemittel (72), um die Radien der scheibenförmigen Schneidklingen (40) anzuzeigen, die durch die Meßmittel (58, 62, 64) gemessen sind.

## Revendications

1. Appareil à refendre (2) pour découper une feuille de carton ondulée (1) qui est amenée en continu le long d'une ligne d'amenée en déplaçant au moins une parmi une pluralité de lames de découpe en forme de disque (40) dudit appareil à refendre (2) actionné par un moyen d'élévation respectif (31) en direction de ladite feuille de carton ondulée (1), comprenant un moyen d'aiguisage (46) pour aiguiser chacune des lames de découpe en forme de disque (40), **caractérisé en ce qu'**il comprend en plus :
- un moyen de mesurage (58) pour mesurer au moins un des rayons et/ou des diamètres desdites lames de découpe en forme de disque (40) ; et
- un moyen de compensation automatique (32, 64) pour compenser la profondeur d'engagement entre lesdites lames de découpe en forme de disque (40) et les coussinets de découpe (44), en se basant sur lesdits rayons desdites lames de découpe en forme de disque et en mesurant par ledit moyen de mesurage (58), afin de fournir un fonctionnement optimisé ou correct pour découper ladite feuille de carton ondulée (1) entre lesdites lames de découpe en forme de disque (40) et lesdits coussinets de découpe (44).

2. Appareil à refendre, tel qu'il est exposé dans la revendication 1, ledit moyen de mesurage comprenant en outre :
- des capteurs de positionnement (50) pour détecter la position verticale de chacune desdites lames de découpe en forme de disque (40) ;
- un capteur optique (58) qui a un axe optique (60) disposé généralement dans une relation parallèle en ce qui concerne la surface de ladite feuille de carton ondulée (1), ledit axe optique (60) étant disposé en adjacence aux bords de découpe circonférentiels desdites lames de découpe en forme de disque (40) ; et
- un moyen de calcul (62) pour calculer le rayon d'au moins une desdites lames de découpe en forme de disque, en se basant sur la position verticale de ladite lame de découpe en forme de disque détectée par ledit capteur de positionnement (50) lorsque les bords de découpe circonférentiels desdites lames de découpe en forme de disque (40) interrompent ledit axe optique (60) dudit capteur optique.

3. Appareil à refendre, tel qu'il est exposé dans l'une ou l'autre des revendications 1 et 2, dans lequel lesdites lames de découpe en forme de disque (40) sont actionnées indépendamment à la verticale par ledit moyen d'élévation respectif (31).

4. Appareil à refendre, tel qu'il est exposé dans l'une des revendications 1, 2 ou 3, dans lequel lesdits moyens d'aiguisage (46) sont commandés d'une manière telle que les durées respectives de l'opération pour aiguiser chacune desdites lames de découpe en forme de disque sont commandées en se basant sur les rayons respectifs desdites lames de découpe en forme de disque (40), mesurés par lesdits moyens de mesurage (58, 62).

5. Appareil à refendre, tel qu'il est exposé dans la revendication 1, dans lequel les rayons desdites lames de découpe en forme de disque (40) sont mesurés en se basant sur les positions dudit moyen d'aiguisage (46) lorsque ledit moyen d'aiguisage (46) termine l'opération d'aiguisage pour lesdites lames de découpe en forme de disque (40).

6. Appareil à refendre (2), tel qu'il est exposé dans l'une quelconque des revendications 1 à 5, comprenant en outre un moyen de prévision (68) afin de prévoir les durées de vie respectives escomptées pour lesdites lames de découpe en forme de disque (40), en se basant sur les rayons desdites lames de découpe en forme de disque (40), mesurés par lesdits moyens de mesurage (58, 62), et sur la longueur courante totale de découpe ou de travail desdites lames de découpe en forme de disque (40) alors qu'elles étaient neuves, dans lequel ledit moyen de prévision (68) prévoit lesdites durées de vie respectives escomptées pour lesdites lames de découpe en forme de disque (40), en considérant des données d'exploration extraites de la courbe de performance montrant les relations historiques entre les rayons desdites lames de découpe en forme de disque (40) et la longueur de découpe ou de travail de celles-ci.

7. Appareil à refendre (2), tel qu'il est exposé dans l'une quelconque des revendications 1 à 6, comprenant en outre un moyen d'affichage (72) pour afficher les rayons desdites lames de découpe en forme de disque (40) mesurés par lesdits moyens de mesurage (58, 62, 64).
